# EUROPÄISCHE PATENTSCHRIFT

(11) **EP 2 411 169 B1**
(45) Veröffentlichungstag und Bekanntmachung des Hinweises auf die Patenterteilung: **09.09.2015**
(21) Anmeldenummer: 10717497.1
(22) Anmeldetag: 23.03.2010
(51) Int. Cl.: B21D 37/14, B21D 28/34, B21D 28/14, B21D 28/00, B23Q 17/09, B23Q 17/20

(54) **WERKZEUGANORDNUNG MIT EINER MEHRZAHL VON AUSGLEICHSSCHEIBEN ZUM AUSGLEICHEN EINER NACHSCHLEIFLÄNGE**
TOOL ARRANGEMENT WITH A MULTIPLICITY OF ADJUSTING SHIMS FOR OVERCOMING A GRINDED LENGTH
ARRANGEMENT D'OUTIL AVEC MULTIPLE CALES DE REGLAGE POUR EQUILIBRER UNE LONGUEUR DE RECTIFICATION

(30) Priorität: 25.03.2009 DE 202009004013 U
(43) Veröffentlichungstag der Anmeldung: 01.02.2012
(73) Patentinhaber: TRUMPF Werkzeugmaschinen GmbH & Co. KG, 71254 Ditzingen (DE)
(72) Erfinder: BÜTTNER, Stefan, 71706 Markgröningen (DE); LAIB, Wolfgang, 74354 Besigheim (DE)
(74) Vertreter: Kohler Schmid Möbus Patentanwälte
(86) Internationale Anmeldenummer: PCT/DE2010/000315
(87) Internationale Veröffentlichungsnummer: WO 2010/108476

(56) Entgegenhaltungen:
- DE-A1- 4 417 972
- FR-A1- 2 424 810
- JP-A- 6 106 256
- JP-A- 2006 239 701
- JP-A- 2006 239 728
- US-A1- 2006 019 218
- US-B1- 6 413 086

## Beschreibung

Die vorliegende Erfindung betrifft eine Werkzeuganordnung und eine Werkzeugmaschine mit mindestens einer solchen Werkzeuganordnung.

Ausgleichsscheiben für Werkzeugmatrizen (oder Werkzeugstempel) werden benötigt, um den Materialabtrag, der beim Nachschleifen der Matrize an deren Oberseite erzeugt wird, auszugleichen und so sicherzustellen, dass die Werkzeugmatrize an ihrer Oberkante auch nach dem Nachschleifen bündig mit einer Arbeitsebene abschließt, an der ein zu bearbeitendes Werkstück gelagert ist.

Aus der JP 06-106256 ist eine Ausgleichsscheibe zum Ausgleichen der Nachschleiflänge einer Werkzeugmatrize bekannt. Die Werkzeugmatrize weist eine Durchtrittsöffnung auf, in die ein zungenförmiger Bereich der Ausgleichsscheibe eingreift, um die Ausgleichsscheibe an der Unterseite der Werkzeugmatrize festzuklemmen. Auf diese Weise können die nachgeschliffene Werkzeugmatrize und die Ausgleichsscheibe als Einheit ausgetauscht werden.

Ein ähnlicher Typ von Ausgleichsscheiben ist in der JP 2006-239 701 beschrieben, bei der zusätzlich ein Einsatz in die Öffnung der Werkzeugmatrize eingeführt wird, in den an der Ausgleichsscheibe vorgesehene Rastnasen eingreifen können. Auch die JP 2006 239 728 beschreibt eine an der Werkzeugmatrize verklemmbare Ausgleichsscheibe, die so ausgebildet sein soll, dass ein Brechen der in die Durchtrittsöffnung der Matrize eingreifenden, elastisch verformbaren Rastnasen verhindert wird.

Die JP 2002-126 831 A2 beschreibt eine Werkzeugmatrizenanordnung, welche aus einer Werkzeugmatrize und einem Ring besteht, der an einem oberen Teilbereich der Werkzeugmatrize fixiert ist. An dem Ring ist ein Medium angebracht, das Informationen über Unterscheidungsmerkmale der Werkzeugmatrizenanordnung speichern kann. Ein solches Medium kann auch zusätzlich an der Oberseite der Werkzeugmatrize gebildet sein.

In der US 2006/0019218 A1 ist ein kieferorthopädisches System zur Durchführung einer interproximalen Reduktion beschrieben. Das System weist Scheiben mit einer jeweils fest vorgegebenen, kalibrierten Dicke auf, an denen ein Schaft befestigt ist. An den Scheiben selbst oder am Schaft kann ein Dicken-Indikator vorgesehen sein, der in Form von Kerben ausgebildet sein kann.

In der US 6,413,086 B1 ist ein System für die Kieferorthopädie mit einer Mehrzahl von klingenartigen Messinstrumenten beschrieben, die einen Haltegriff und einen Schlüsselabschnitt mit vorgegebener Dicke aufweisen. An dem Haltegriff können Kerben vorgesehen sein, deren Anzahl entsprechend der vorgegebenen Dicke des Schlüsselabschnitts festgelegt ist.

### Aufgabe der Erfindung

Es ist die Aufgabe der vorliegenden Erfindung, beim Ausgleichen der Nachschleiflänge einer Werkzeugmatrize mit Hilfe von Ausgleichsscheiben die ProzessSicherheit zu erhöhen.

### Gegenstand der Erfindung

Diese Aufgabe wird erfindungsgemäß gelöst durch eine Werkzeuganordnung, umfassend: Eine Werkzeugmatrize, sowie eine Mehrzahl von Ausgleichsscheiben unterschiedlicher Scheibendicke, die der Werkzeugmatrize zum Ausgleich der Nachschleiflänge unterlegt sind, wobei die Scheibendicke ein ganzzahliges Vielfaches einer vordefinierten Maßeinheit ist, und wobei jede Ausgleichsscheibe eine Codierung in Form einer Profilierung aufweist, in der die Scheibendicke der Ausgleichsscheibe codiert ist.

Zum Ausgleich der Nachschleiflänge werden in der Regel Ausgleichsscheiben mit unterschiedlicher Scheibendicke, aber identischer Geometrie verwendet. Unterschiede in der Scheibendicke sind aber aufgrund der geringen Dicken der verwendeten Ausgleichsscheiben bzw. der geringen Dickenunterschiede (im Bereich von 1/10 mm) zwischen den einzelnen Ausgleichsscheiben nur schwer zu erkennen (1/10 mm ist der Grenzbereich für die Erkennbarkeit durch das Auge). Aus diesem Grund war es bisher erforderlich, die Ausgleichsscheiben vor dem Gebrauch zur Erkennung der Scheibendicke entweder in die Hand zu nehmen, um eine - ggf. fehlerhafte - Schätzung der Dicke vorzunehmen, oder die Ausgleichsscheiben zu vermessen. Da die Anwender in der Regel die Ausgleichsscheiben nach Scheibendicke geordnet z.B. in unterschiedlichen Stapeln, Behältern, etc. lagern, muss dieser Vorgang nach dem Gebrauch der Ausgleichsscheiben wiederholt werden, was einen nicht unerheblichen Zeitaufwand mit sich bringt, zumal eine falsche Zuordnung der Ausgleichsscheiben zu einem Stapel unwillkürlich einen Fehler beim nächsten Gebrauch der Ausgleichsscheibe zur Folge hat. Daher wird nach dem Anbringen der Ausgleichsscheiben in der Regel zur Sicherheit eine Messung der Höhe der gesamten Werkzeugmatrizenanordnung (Werkzeugmatrize mit Ausgleichsscheiben) vorgenommen, obwohl die Bauteiltoleranzen so gering sind, dass eine solche Messung bei korrekter Auswahl der Ausgleichsscheiben unterbleiben könnte.

Die Erfinder haben erkannt, dass es aufgrund der geringen Dicken der Ausgleichsscheiben günstig ist, wenn die Dicke der Scheiben visuell erkennbar gemacht wird und schlagen daher vor, an der Ausgleichsscheibe eine Codierung der Scheibendicke anzubringen.

Die Codierung ist in Form einer Profilierung ausgebildet. Dies ist günstig, da die Profilierung die Dicke der Ausgleichsscheibe nicht beeinflusst, wie dies ggf. bei der Verwendung von Lacken oder einer Prägung der Fall wäre. Die Profilierung kann auf einfache Weise an einem Satz von Ausgleichsscheiben unterschiedlicher Dicke angebracht werden.

Die Geometrie der Ausgleichsscheibe ist auf die Geometrie der Werkzeugmatrize abgestimmt und typischerweise kreisringförmig ausgebildet. Der Ringdurchmesser ist hierbei in der Regel so gewählt, dass die Ausgleichsscheibe einerseits nicht in die in der Matrize typischer Weise vorgesehene Durchtrittsöffnung hineinragt und - je nach Anwendung - den maximalen Durchmesser der Werkzeugmatrize nicht überschreitet.

Aufgrund der Tatsache, dass die Scheibendicke ein ganzzahliges Vielfaches einer vordefinierten Maßeinheit ist, kann die Nachschleiflänge in Vielfachen der vordefinierten Maßeinheit ausgeglichen werden. Die Ausgleichsscheibe(n) werden zu diesem Zweck zwischen Matrize und Matrizenteller oder Matrizeneinsatz und Zwischenring, Adapter, ... eingelegt und bringen die Matrizenoberkante auf eine Höhe mit der Arbeitsebene. Ein Satz Ausgleichsscheiben kann z.B. Scheibentypen mit einer Dicke von 0,1 mm, 0,3 mm und 0,5 mm aufweisen.

Die Maßeinheit für die geringste Scheibendicke ist hierbei so klein gewählt, dass ein Nachschleifen der Matrize mit einem Nachschleifbetrag unterhalb dieser Maßeinheit typischer Weise keine nachteiligen Auswirkungen auf den Betrieb einer Werkzeugmaschine zum schneidenden und/oder umformenden Bearbeiten eines plattenartigen Werkstücks, vorzugsweise eines Blechs hat, die mindestens eine solche Werkzeugmatrizenanordnung aufweist. Eine solche Werkzeugmaschine stellt einen weiteren Gegenstand der Erfindung dar.

In einer Ausführungsform weist die Codierung mindestens eine Codiermarke auf, die der vordefinierten Maßeinheit für die Scheibendicke entspricht. Mit zunehmender Anzahl der Codiermarken nimmt die Scheibendicke zu, weshalb die Scheibendicke bzw. der Unterschied zwischen den Dicken unterschiedlicher Scheiben besonders einfach visuell erfasst werden kann.

In einer Weiterbildung liegt die vordefinierte Maßeinheit für die Codiermarke im Bereich zwischen 0,05 mm und 0,2 mm, bevorzugt bei 0,1 mm. In der Regel weist die dünnste Ausgleichsscheibe in einem für das Unterlegen einer Werkzeugmatrize vorgesehenen Satz von Ausgleichsscheiben eine Scheibendicke (z.B. 0,1 mm) auf, die der vordefinierten Maßeinheit entspricht. Typischer Weise haben alle Ausgleichsscheiben eines Satzes, der für die vorliegende Anwendung verwendet wird, eine Scheibendicke, die bei 1 mm oder darunter liegt.

In einer weiteren Weiterbildung ist die Scheibendicke ein ganzzahliges Vielfaches der vordefinierten Maßeinheit, wobei das ganzzahlige Vielfache der Anzahl der - formidentischen - Codiermarken entspricht. Auf diese Weise kann die Scheibendicke eindeutig anhand der Anzahl der Codiermarken bestimmt werden. So entspricht z.B. bei einer Maßeinheit von 0,1 mm eine Anzahl von 3 Codiermarken einer Scheibendicke von 0,3 mm.

In einer Weiterbildung ist die Profilierung entlang des Außenrands der Ausgleichsscheibe gebildet und die Codiermarken sind bevorzugt als Kerben ausgebildet. Durch die Anbringung der Profilierung am Außenrand der Scheiben kann die Scheibendicke auch visuell erfasst werden, wenn die Ausgleichsscheibe bereits an der Werkzeugmatrize montiert ist bzw. wenn mehrere Ausgleichsscheiben übereinander gestapelt werden. Die Profilierung am Außenrand der Scheibe ist typischer Weise von beiden Seiten der Scheibe zu erkennen. Bereits im Einsatz befindliche Scheiben ohne Codierung können auf einfache Weise mit einer Codierung versehen werden, indem z.B. paketweise Kerben in die Scheiben eingebracht werden. Es versteht sich, dass alternativ oder zusätzlich auch eine Profilierung am Innenrand der Scheiben angebracht werden kann.

In einer weiteren Ausführungsform ist die Profilierung stirnseitig angebracht, wobei die Codiermarken bevorzugt als durchgehende Löcher ausgebildet sind. Durch die Verwendung von stirnseitigen Codiermarken in Form von durchgehenden Löchern kann ebenfalls sichergestellt werden, dass die Codierung von beiden Seiten der Scheibe erkennbar ist. Es versteht sich, dass ggf. auch eine andere Form der Profilierung nur an den jeweiligen Stirnseiten angebracht werden kann. Aufgrund der geringen Scheibendicke führen Prägungen an der Stirnseite z.B. in der Regel dazu, dass die Prägung auch auf der anderen Seite der Scheiben spiegelbildlich zu erkennen ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Werkzeugmaschine,
- Fig. 2: eine schematische Darstellung einer Matrizenanordnung bei der stanzenden Bearbeitung an einem Werkstücks,
- Fign. 3a-c: eine schematische Darstellung eines ersten Satzes von Ausgleichsscheiben mit Kerben als Codiermarken, und
- Fign. 4a-c: eine schematische Darstellung eines zweiten Satzes von Ausgleichsscheiben mit einer Lochcodierung.

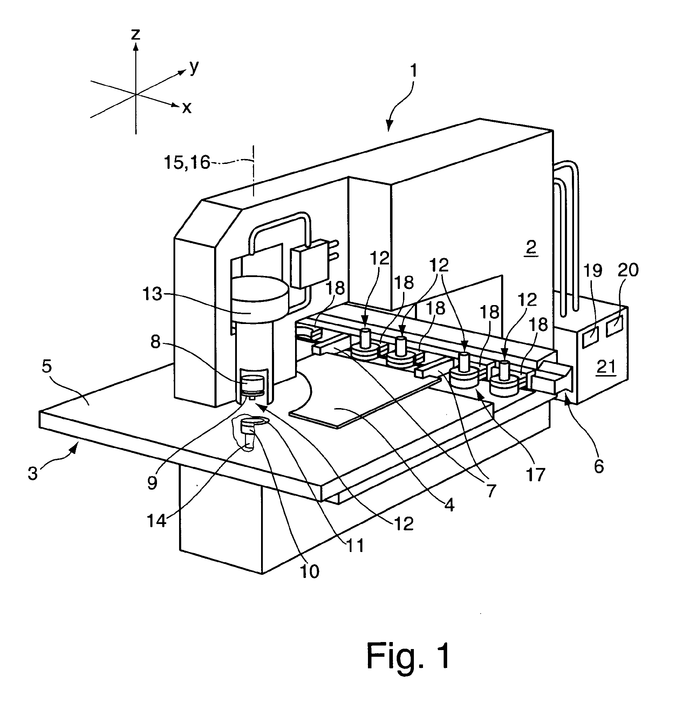

**Fig. 1** zeigt eine Werkzeugmaschine **1** zum Schneiden und/oder Umformen von plattenartigen Werkstücken in Form einer Stanz-/Umformmaschine zum Bearbeiten von Blechen. Die Stanz-/Umformmaschine 1 weist ein C-förmiges Maschinengestell **2** auf, in dessen Rachenraum eine als Werkstücktisch **3** ausgebildete Werkstückauflage angeordnet ist, welche zur Lagerung eines zu bearbeitenden Werkstücks in Form eines Bleches **4** dient. An seiner Oberseite bildet der Werkstücktisch 3 eine horizontale Auflageebene **5** für das zu bearbeitende Blech 4, welche parallel zur x/y-Ebene des in Fig. 1 gezeigten Koordinatensystems verläuft. Mittels einer Koordinatenführung **6** ist das über Spannzangen **7** eingespannte Blech 4 in der Auflageebene 5 des Werkstücktisches 3 verschiebbar.

An dem vorderen Ende des oberen Schenkels des C-förmigen Maschinengestells 2 ist eine Werkzeugstempel-Aufnahme **8** angeordnet, in welcher ein Werkzeugstempel **9** gelagert ist. Weiterhin ist an dem vorderen Ende des unteren Schenkels des C-förmigen Maschinengestells 2 eine Werkzeugmatrizen-Aufnahme **10** vorgesehen, in der eine Werkzeugmatrize **11** gelagert ist. Der Werkzeugstempel 9 und die Werkzeugmatrize 11 bilden ein Werkzeug **12** zum trennenden und/oder umformenden Bearbeiten des Blechs 4.

Eine Antriebseinheit der Stanz-/Umformmaschine 1 wird von einem Stempel-Antrieb **13** und einem Matrizen-Antrieb **14** in Form von Linearantrieben gebildet. Mittels des Stempel-Antriebs 13 ist die Werkzeugstempel-Aufnahme 8 mitsamt dem daran gelagerten bzw. festgelegten Werkzeugstempel 9 entlang einer Hubachse **15** gegenüber dem Werkstücktisch 3 heb- und senkbar. Auch sind die Werkzeugstempel-Aufnahme 8 und die Werkzeugmatrizen-Aufnahme, 10 mittels eines nicht näher gezeigten Drehantriebs um eine mit der Hubachse 15 identische Werkzeugdrehachse **16** dreheinstellbar.

An der Koordinatenführung 6 ist ein Linearmagazin **17** mit weiteren Werkzeugen 12 vorgesehen. Die in dem Linearmagazin 17 befindlichen Werkzeuge 12 werden jeweils von einer Werkzeugkassette **18** gehalten und sind je nach Bedarf zur Bearbeitung des Blechs 4 an der Werkzeugstempel-Aufnahme 8 bzw. der Werkzeugmatrizen-Aufnahme 10 festlegbar.

Beim Werkzeugwechsel und bei der Werkstückbearbeitung werden sämtliche Antriebe der Stanz-Umformmaschine 1 mittels einer numerischen Steuereinheit **21** gesteuert. Die numerische Steuereinheit 21 umfasst insbesondere Speichermittel **19** zum Speichern von Werkzeugdaten und zudem Steuermittel **20**, um sowohl die Heb-, Senk- und Drehbewegungen der Werkzeugstempel-Aufnahme 8 als auch die Drehbewegungen der Werkzeugmatrizen-Aufnahme 10 basierend auf den gespeicherten Daten über das Werkstück 4 bzw. das Werkzeug 12 zu bemessen und zu steuern.

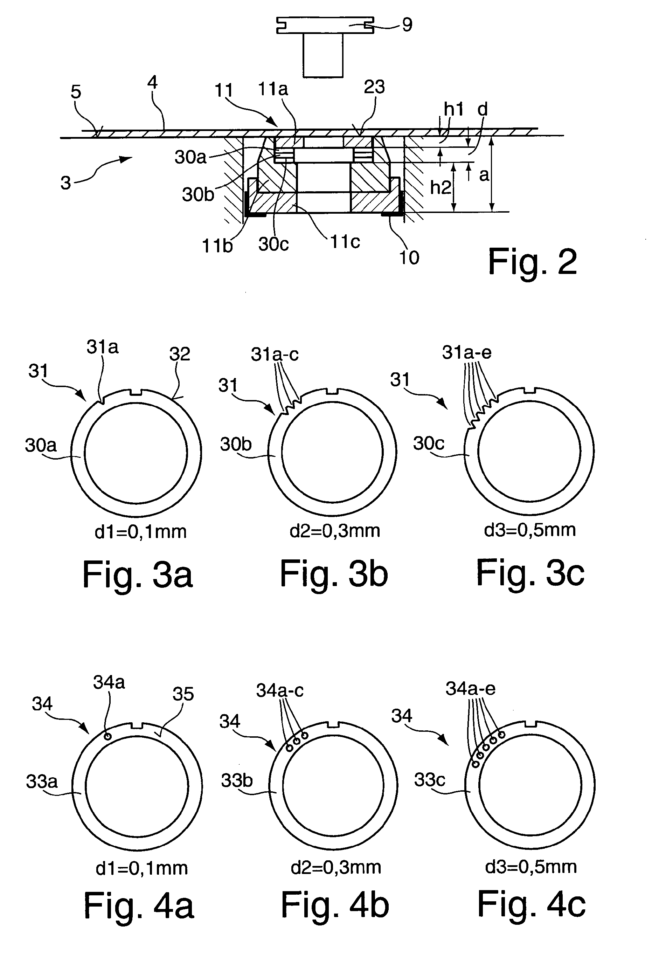

Da sich die Werkzeugmatrize 11 beim Gebrauch an ihrer Oberseite abnutzt, muss diese von Zeit zu Zeit nachgeschliffen werden. Durch das Abschleifen verringert sich jedoch die Höhe **h** der Werkzeugmatrize 11, vgl. **Fig. 2**, so dass der Abstand **a** zwischen der Werkstückebene 5 und der Werkzeugmatrizen-Aufnahme 10 nicht mehr der ursprünglichen Höhe der Werkzeugmatrize 11 (ohne Nachschleifen) entspricht. Um zu gewährleisten, dass die Oberseite **23** der nachgeschliffenen Werkzeugmatrize 11 trotzdem bündig mit der Werkstückebene 5 abschließt, sind daher zwischen einem Matrizeneinsatz **11a** und einem Adapterring **11b** der Werkzeugmatrize 11 eine Mehrzahl von Ausgleichsscheiben **30a-c** angeordnet. Die Ausgleichsscheiben 30a-c weisen zusammen eine Dicke **d** auf, die dem Nachschleifbetrag an der Werkzeugmatrize 11 entsprechen, so dass der Nachschleifbetrag ausgeglichen werden kann.

Beträgt der Abstand a zwischen der Werkstückebene 5 und der Werkzeugmatrizen-Aufnahme 10 z.B. 30 mm und wurde die Werkzeugmatrize um 0,9 mm nachgeschliffen, so weist diese nur noch eine Höhe **h1 + h2** von 29,1 mm auf, d.h. die Gesamtdicke d der Ausgleichsscheiben 30a-c muss ebenfalls bei 0,9 mm liegen.

Ein Satz von drei Ausgleichsscheiben, der geeignet ist, um die korrekte Gesamtdicke d zu erzeugen, ist in **Fign. 3a****-c** dargestellt. Die erste Ausgleichsscheibe 30a weist hierbei eine Scheibendicke d1 von 0,1 mm auf, die zweite Ausgleichsscheibe 30b eine Scheibendicke d2 von 0,3 mm und die dritte Ausgleichsscheibe 30c eine Scheibendicke d3 von 0,5 mm. Alle drei kreisringförmigen Ausgleichsscheiben 30a-c weisen weiterhin eine rechteckige Einkerbung für deren verdrehsichere Lagerung auf.

Wie in Fign. 3a-c ebenfalls zu erkennen, unterscheiden sich die Ausgleichsscheiben 30a-c außer in ihrer Dicke nur durch eine Profilierung **31** in Form von dreieckigen Kerben **31a-e**, die am Außenrand **32** der Ausgleichsscheiben 30a-c angebracht sind. Die Kerben 31a-c dienen als Codiermarken zur Codierung der Scheibendicke der Ausgleichsscheiben 30a-c. Eine einzelne Kerbe 31a-e entspricht einer Maßeinheit für die Scheibendicke, die im vorliegenden Fall bei 0,1 mm liegt. Entsprechend sind an den Ausgleichsscheiben 30a-c die Scheibendicken d1 bis d3 von 0,1 mm, 0,3 mm und 0,5 mm durch eine Kerbe 30a, drei Kerben 30a-c bzw. fünf Kerben 31a-e codiert. Die Anordnung der Kerben 31a-e am Außenrand der Ausgleichsscheiben 30a-c erlaubt das Erkennen der Scheibendicken d1 bis d3 auch dann, wenn mehrere Ausgleichsscheiben 30a-c mit unterschiedlicher Dicke übereinander gestapelt sind.

Die Ausgleichsscheiben 30a-c können wie in Fig. 2 gezeigt zwischen dem Matrizen-Einsatz **11a der** Werkzeugmatrize 11 und dem Adapterring 11b und/oder zwischen dem Adapterring 11b und einem Matrizenteller **11c** angeordnet sein, der an der Werkzeugmatrizen-Aufnahme 10 festgelegt ist. Es versteht sich, dass die Ausgleichsscheiben, die zwischen dem Matrizen-Einsatz 11a und dem Adapterring 11 b eingebracht werden, in der Regel einen anderen Durchmesser aufweisen als die Ausgleichsscheiben, die zwischen den Adapterring 11 b und den Matrizenteller 11 c eingebracht werden. Typischer Weise werden die Ausgleichsscheiben 30a-c beim Vorrüsten eingelegt, d.h. beim Zusammensetzen der Einzelteile 11a-c der mehrteiligen Werkzeugmatrize 11 vor dem Einlegen in die Werkzeugkassette 18. Es versteht sich, dass die Werkzeugmatrize 11 auch aus mehr oder aus weniger Einzelteilen zusammengesetzt sein kann.

**Fign. 4a****-c** zeigen eine weiteren Satz von Ausgleichsscheiben **33a-c**, der sich von dem in Fign. 3a-c gezeigten Satz dadurch unterscheidet, dass die Codierung **34** durch eine Profilierung in Form von Löchern **34a-e** in der Stirnseite **35** der Ausgleichsscheiben 33a-c gebildet ist. Die Anzahl der Löcher 34a-e entspricht analog zu Fign. 3a-c dem Multiplikator, mit dem die Maßeinheit (hier: 0,1 mm) multipliziert werden muss, um die Scheibendicke d1 bis d3 zu erhalten. Die Löcher 34a-e sind im vorliegenden Fall durchgehend, so dass die Codierung von beiden Seiten der Ausgleichsscheiben 33a-c lesbar ist.

Es versteht sich, dass die Maßeinheit nicht 0,1 mm betragen muss, sondern abweichend gewählt werden kann. Typischer Weise liegt die Maßeinheit jedoch im Bereich zwischen 0,05 mm und 0,2 mm.

In jedem Fall kann durch die Codierung der Scheibendicke an den Ausgleichsscheiben eine visuelle Erkennung der Scheibendicke vorgenommen werden und damit die Prozesssicherheit beim Ausgleichen des Nachschleifbetrags einer Werkzeugmatrize erhöht werden. Es versteht sich, dass die oben beschriebenen, codierten Ausgleichsscheiben in analoger Weise auch zum Ausgleich der Nachschleiflänge eines Werkzeugstempels einer Werkzeugmaschine verwendet werden können.

## Patentansprüche

1. Werkzeuganordnung (11, 30a-c, 33a-c), umfassend:
eine Werkzeugmatrize (11), sowie
eine Mehrzahl von Ausgleichsscheiben (30a-c, 33a-c) unterschiedlicher Scheibendicke (d1 bis d3), die der Werkzeugmatrize (11) zum Ausgleich der Nachschleiflänge unterlegt sind, wobei die Scheibendicke (d1 bis d3) jeder Ausgleichsscheibe (30a-c, 33a-c) ein ganzzahliges Vielfaches einer vordefinierten Maßeinheit ist, und wobei jede Ausgleichsscheibe (30a-c, 33a-c) eine Codierung (31, 34) in Form einer Profilierung (31, 34) aufweist, in der die Scheibendicke (d1 bis d3) der Ausgleichsscheibe (30a-c, 33a-c) codiert ist.

2. Werkzeuganordnung nach Anspruch 1, bei der die Codierung (31, 34) mindestens eine Codiermarke (31a-e, 34a-e) aufweist, die der vordefinierten Maßeinheit für die Scheibendicke (d1 bis d3) entspricht.

3. Werkzeuganordnung nach Anspruch 2, bei der die vordefinierte Maßeinheit der Codiermarke (31a-e, 34a-e) im Bereich zwischen 0,05 mm und 0,2 mm, bevorzugt bei 0,1 mm liegt.

4. Werkzeuganordnung nach Anspruch 2 oder 3, bei der die Scheibendicke (d1 bis d3) ein ganzzahliges Vielfaches der vordefinierten Maßeinheit ist, das der Anzahl der Codiermarken (31a-e, 34a-e) entspricht.

5. Werkzeuganordnung nach einem der vorhergehenden Ansprüche, bei der die Profilierung (31) entlang des Außenrands (32) der Ausgleichsscheibe (30a-c) gebildet ist, wobei die Codiermarken bevorzugt als Kerben (31a-e) ausgebildet sind.

6. Werkzeuganordnung nach einem der vorhergehenden Ansprüche, bei der die Profilierung (34) stirnseitig angebracht ist, wobei die Codiermarken bevorzugt als Durchgangslöcher (34a-e) ausgebildet sind.

7. Werkzeugmaschine (1) zum schneidenden und/oder umformenden Bearbeiten eines plattenartigen Werkstücks (4), vorzugsweise eines Blechs, umfassend:
mindestens eine Werkzeuganordnung (11, 30a-c, 33a-c) nach einem der vorhergehenden Ansprüche.

## Claims

1. Tool arrangement (11, 30a-c, 33a-c) comprising:
a tool die (11) as well as
a plurality of compensation discs (30a-c, 33a-c) of different disc thicknesses (d1 to d3) which are placed below the tool die (11) in order to compensate for the regrinding length, wherein the disc thickness (d1 to d3) of each compensation disc (30a-c, 33a-c) is an integral multiple of a predefined measurement unit, and wherein each compensation disc (30a-c, 33a-c) has a coding (31, 34) in the form of a profiled arrangement (31, 34), in which the disc thickness (d1 to d3) of the compensation disc (30a-c, 33a-c) is encoded.

2. Tool arrangement according to claim 1, wherein the coding (31, 34) has at least one coding mark (31a-e, 34a-e) which corresponds to the predefined measurement unit for the disc thickness (d1 to d3).

3. Tool arrangement according to claim 2, wherein the predefined measurement unit of the coding mark (31a-e, 34a-e) is in the range between 0.05 mm and 0.2 mm, preferably 0.1 mm.

4. Tool arrangement according to claim 2 or 3, wherein the disc thickness (d1 to d3) is an integral multiple of the predefined measurement unit which corresponds to the number of coding marks (31a-e, 34a-e).

5. Tool arrangement according to any one of the preceding claims, wherein the profiled arrangement (31) is formed along the outer edge (32) of the compensation disc (30a-c), the coding marks preferably being constructed as notches (31a-e).

6. Tool arrangement according to any one of the preceding claims, wherein the profiled arrangement (34) is applied to the end face, the coding marks preferably being constructed as through-holes (34a-e).

7. Machine tool (1) for the cutting and/or shaping processing operation of a plate-like workpiece (4), preferably a metal sheet, comprising:
at least one tool arrangement (11, 30a-c, 33a-c) according to any one of the preceding claims.

## Revendications

1. Ensemble d'outillage (11, 30a-c, 33a-c) comprenant :
une matrice d'outillage (11),
ainsi qu'une pluralité de disques de compensation (30a-c, 33a-c) d'épaisseurs différentes (d1 à d3), qui sont placés au-dessous de ladite matrice d'outillage (11) en vue de compenser la longueur de réaffûtage, l'épaisseur (d1 à d3) de chaque disque de compensation (30a-c, 33a-c) étant un multiple entier d'une unité de mesure prédéfinie, et chaque disque de compensation (30a-c, 33a-c) présentant un codage (31, 34) qui revêt la forme d'un profilage (31, 34) dans lequel ladite épaisseur (d1 à d3) dudit disque de compensation (30a-c, 33a-c) est codée.

2. Ensemble d'outillage selon la revendication 1, dans lequel le codage (31, 34) comporte au moins un repère de codage (31a-e, 34a-e) qui correspond à l'unité de mesure prédéfinie, affectée à l'épaisseur (d1 à d3) du disque.

3. Ensemble d'outillage selon la revendication 2, dans lequel l'unité de mesure prédéfinie du repère de codage (31a-e, 34a-e) se situe dans la plage comprise entre 0,05 mm et 0,2 mm, et avoisine 0,1 mm de préférence.

4. Ensemble d'outillage selon la revendication 2 ou 3, dans lequel l'épaisseur (d1 à d3) du disque est un multiple entier de l'unité de mesure prédéfinie, qui correspond au nombre des repères de codage (31a-e, 34a-e).

5. Ensemble d'outillage selon l'une des revendications précédentes, dans lequel le profilage (31) est ménagé le long du bord extérieur (32) du disque de compensation (30a-c), les repères de codage étant réalisés, de préférence, sous forme d'encoches (31a-e).

6. Ensemble d'outillage selon l'une des revendications précédentes, dans lequel le profilage (34) est ménagé frontalement, les repères de codage étant réalisés, de préférence, sous forme de trous traversants (34a-e).

7. Machine-outil (1) dévolue à l'usinage, par découpage et/ou par déformation, d'une pièce (4) du type plaque se présentant, de préférence, comme une tôle, comprenant :
au moins un ensemble d'outillage (11, 30a-c, 33a-c) conforme à l'une des revendications précédentes.
